# EUROPÄISCHE PATENTSCHRIFT

(11) **EP 0 557 351 B1**
(45) Veröffentlichungstag und Bekanntmachung des Hinweises auf die Patenterteilung: **01.06.1994**
(21) Anmeldenummer: 91919913.3
(22) Anmeldetag: 15.11.1991
(51) Int. Cl.: B65D 5/42, B65D 5/40, B65D 3/22, B65D 5/56

(54) **VERFAHREN ZUM HERSTELLEN EINES PAPIERBEHÄLTERS MIT EINER FEUCHTIGKEITSGESCHÜTZTEN ZUSCHNITTKANTE UND DANACH HERGESTELLTER PAPIERBEHÄLTER**
METHOD OF MANUFACTURING A CONTAINER MADE OF PAPER PROTECTED AGAINST MOISTURE AT THE EDGES WHERE THE PAPER HAS BEEN CUT, AND A PAPER CONTAINER MANUFACTURED BY THIS METHOD
PROCEDE POUR LA FABRICATION D'UN RECIPIENT EN PAPIER DONT LE BORD DE DECOUPE EST PROTEGE CONTRE L'HUMIDITE, AINSI QUE RECIPIENT EN PAPIER FABRIQUE SELON CE PROCEDE

(30) Priorität: 15.11.1990 DE 4036454
(43) Veröffentlichungstag der Anmeldung: 01.09.1993
(73) Patentinhaber: Maschinenfabrik Rissen GmbH, D-22552 Hamburg (DE)
(72) Erfinder: SPERBER, Hermann, D-2000 Hamburg 52 (DE)
(74) Vertreter: Glawe, Delfs, Moll & Partner
(86) Internationale Anmeldenummer: EP9102153
(87) Internationale Veröffentlichungsnummer: WO9208652

(56) Entgegenhaltungen:
- US-A- 3 198 416
- PATENT ABSTRACTS OF JAPAN, VOL. 13, NO. 577 (M-910)(3925) 26 SEPTEMBER 1989

## Beschreibung

Die Verwendung von flüssigkeitsdicht beschichtetem Papier für feuchtes Füllgut kann auf Schwierigkeiten stoßen, wenn der den Behälter bildende Papierzuschnitt eine auf der Füllgutseite frei liegende, ungeschützte Schnittkante aufweist, von der her die Flüssigkeit in das Papier eindringen kann. Als Schutzmaßnahme ist es bekannt, um die Schnittkante einen Folienstreifen zu schlagen, der mit beiden Seiten des Zuschnitts versiegelt ist (DE-A 3838600) oder die Kante mit einem erstarrenden oder flüssig bleibenden Imprägnierungsmittel zu behandeln (DE-A 3011630). - Bekannt ist es ferner (US-A-3604613; US-A-3198416, Fig. 14 u. 15; GB-A-2124997, Fig. 9), den die Kante bildenden Randstreifen des Zuschnitts auf halbe Dicke abzufräsen und die Hälfte des gefrästen Randstreifens auf seine andere Hälfte derart umzuklappen, daß die beschichtete Oberfläche des Randstreifens die Kante bildet. Zwischen dem umgeklappten Teil des Randstreifens und dem ungefrästen Bereich liegt dann eine Fuge. Wenn bei-der Bildung des Behälters, der diese Fuge enthaltende Rand mit einem anderen Zuschnittrand versiegelt wird, wird die Fuge von dem anderen Rand abgedeckt, wobei ein dichter Anschluß sowohl an dem umgelegten Teil des gefrästen Randstreifens als auch in dem benachbarten Streifen des ungefrästen Materials zustande kommt. Die Versiegelung mit dem umgelegten Randstreifen ist erforderlich, um die Fuge von dem Feuchtigkeitseinfluß aus dem Behälterinnern abzuschließen. Die Versiegelung mit dem sich anschließenden Streifen des ungefrästen Materials ist erforderlich, um die Kraftübertragung vom einen Zuschnittrand auf den anderen zu gewährleisten, die im Bereich des umgeschlagenen Randstreifens nicht sicher zustandekommen kann. Außerdem muß die Kraftübertragung über die Fuge hinweggreifen, da an dieser Stelle das Material geschwächt ist. - Dieselben Nachteile werden dann in Kauf genommen, wenn der Zuschnittrand keilförmig abgefräst wird und auf sich selbst zurückgeschlagen wird (GB-A-2008076). - Es ist auch bekannt, den die Kante bildenden Randstreifen des Zuschnitts so weit abzufräsen, daß nur noch die Beschichtungsfolie übrigbleibt, die zwecks besserer Beleimung noch mit Papierfasern behaftet ist, und diese auf den die zu schützende Kante bildenden Zuschnittrand zurückzuschlagen und damit unter Leimzusatz zu verbinden (US-A-3198416, Fig. 10, 11). Die praktisch vollständige Abfräsung des Papiers, die Beleimung und das Umfalten der Beschichtungsfolie setzt jedoch voraus, daß die Beschichtungsfolie hohe Eigenstabilität besitzt und also sehr dick ist, was bei heutzutage verwendeten Papierbehältern in der Regel nicht der Fall ist. Vielmehr werden Beschichtungsdicken von etwa 0,015 bis 0,05 mm verwendet, deren Eigenstabilität weder für den Fräsvorgang noch für die Handhabung beim Umschlagen der Beschichtung auf sich selbst ausreicht. - Schließlich ist es auch bekannt (US-A-3444792), den Randstreifen in seiner gesamten Dicke in die Überlappungsnaht einzuschlagen. Jedoch ist dies in vielen Fällen, bspw. bei den Mantelnähten von Papierbechern deshalb nicht angängig, weil dadurch die Nahtdicke zu groß wird für die Kreuzungspunkte mit anderen Nähten, bspw. einer Bodennaht. - Zusammenfassend läßt sich demnach feststellen, daß der Stand der Technik für Überlappungsnähte, die nicht zu dick werden dürfen, unter Verwendung eines abgefrästen Randstreifens nur zwei Möglichkeiten zur Verfügung stellt. Die erste besteht darin, daß der Randstreifen auf etwa halbe Dicke (oder keilförmig) abgefräst wird, um auf sich selbst zurückgeschlagen werden zu können, was jedoch Leimzusatz erfordert und/oder Festigkeitseinbuße mit sich bringt. Die zweite besteht darin, daß der Randstreifen praktisch völlig bis auf die verbleibende Beschichtung abgefräst wird, was aber nur bei dicker, eigenstabiler Beschichtung möglich ist.

Ausgehend von dem Stand der Technik gemäß US-A 3 198 416 (Fig. 16 und 17) liegt der Erfindung daher die Aufgabe zugrunde, diese Nachteile zu vermeiden. Die erfindungsgemäße Lösung besteht in den Merkmalen der Ansprüche.

Gemäß der Erfindung wird der Randstreifen auf eine Dicke abgefräst, bei der die Kombination von Papier-Restschicht und Beschichtung gerade noch die erforderliche Eigenfestigkeit für den Fräsvorgang und die anschließende Handhabung gewährleistet. Dabei erhält man eine Papierrestdicke von etwa 0,1 mm, die so gering ist, daß sie in der Überlappungsnaht nicht nachteilig aufträgt. Ihre Dünnheit von maximal 0,2 mm gestattet es, den abgefrästen und umgeschlagenen Randstreifen zwischen die Überlappungsränder des Behälterzuschnitts einzubringen, ohne daß dadurch die Gesamtdicke der Naht störend anwächst. Die Mehrdicke der Naht ist nämlich nicht größer als im Falle der Umsiegelung der Kante mit einem besonderen Kunststoffstreifen. Überraschend ist ferner, daß es möglich ist, die Kraftübertragung zwischen den Zuschnitträndern ausschließlich oder wenigstens zu einem erheblichen Teil über den umgeschlagenen, abgefrästen Randstreifen zu leiten. Während man bei einer dickeren Papierlage zwischen den Zuschnitträndern beobachtet hat, daß diese unter den Nahtkräften dazu neigt, sich zu delaminieren oder aufzuschälen, wird dieser Effekt bei dem gemäß der Erfindung sehr dünn abgefrästen Material praktisch nicht beobachtet. Der Grund mag darin liegen, daß bei der Versiegelung unter Hitze und Druck der zur Versiegelung verwendete thermoplastische Kunststoff von beiden Seiten in die bei der Abfräsung verbliebene Restschicht des Papiers eindringt und sie in einer im Verhältnis zu der verbliebenen Dicke beträchtlichen Tiefe zu verfestigen vermag. Damit dieser Effekt eintreten kann, ist die verbleibende Papierschicht zweckmäßigerweise etwa so groß wie oder nicht dicker als die doppelte gemeinsame Dicke der auf ihren beiden Seiten zur Verfügung stehenden Siegelmaterialschichten oder - nach einer anderen Charakterisierung - etwa so groß wie oder nicht größer als die doppelte Summe der beiderseitigen Eindringtiefen des Siegelungsmaterials.

Zwar kann man die Überlappungsbreite der zu verbindenden Zuschnittränder über die Breite des zurückgeschlagenen, abgefrästen Randstreifens hinausgreifen lassen. Jedoch ist dies in der Regel nicht erforderlich, weil der Randstreifen zur alleinigen Kraftübertragung in der Lage ist.

Besonders vorteilhaft ist die Versiegelung mittels Ultraschall. Es hat sich nämlich gezeigt, daß die Reibungsverluste, durch die Ultraschallenergie in Wärme umgesetzt wird, dort besonders groß ist, wo das Eindringen des schmelzflüssigen Beschichtungsmaterials in die Papierschicht erwünscht ist. Auch fördern die Ultraschallschwingungen durch die Erzeugung von Mikrorelativbewegungen im Papiergefüge die Weiterförderung mikroskopisch kleiner, geschmolzener Kunststoffpartikeln in die Papiermasse hinein, wodurch die Tiefenwirkung der Papierverfestigung in dem erfindungsgemäßen Zusammenhang überraschenderweise gesteigert wird.

Vorrichtungen zum Abfräsen des Papiers stehen im Stand der Technik zur Verfügung und bedürfen daher hier keiner Erläuterung.

Die Erfindung wird im folgenden näher unter Bezugnahme auf die Zeichnung erläutert. Darin zeigen schematisch in vergrößerndem Maßstab:
- Fig. 1, 2 und 3: aufeinanderfolgende Herstellungsphasen der Randstreifenbearbeitung und
- Fig. 4: einen Querschnitt durch die fertige Naht.

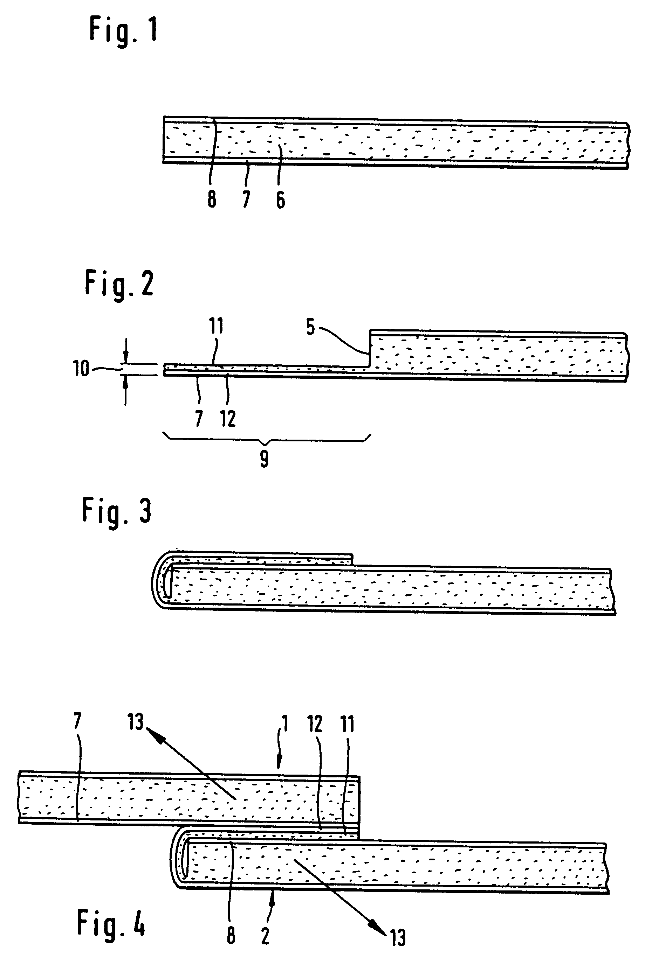

Zwei Zuschnittränder 1 und 2 eines Zuschnitts, der aus beidseitig mit thermoplastischem Kunststoff siegelbar beschichtetem Papier oder entsprechendem Faserstoff besteht, sind gemäß Fig. 4 miteinander zur Bildung einer Überlappungsnaht, bspw. der Mantelnaht eines Papierbechers, versiegelt. Dabei ist die Zuschnittkante 5 vor Flüssigkeitseinwirkung geschützt.

Gemäß Fig. 1 besteht das verwendete Material aus einer Papierschicht 6, einer inneren siegelbaren Beschichtung 7 und einer äußeren siegelbaren Beschichtung 8. Die Dicke des Papiermaterials 6 liegt im Anwendungsbereich der Erfindung im allgemeinen zwischen 0,35 und 0,5 mm. Die Beschichtungen 7, 8 liegen im allgemeinen im Dickenbereich von etwa 0,02 bis 0,05 mm.

Gemäß Fig. 2 wird zunächst ein Randstreifen 9 des Zuschnitts von der später außen zu liegen bestimmten Seite her mit bekannten Mitteln auf eine Dicke 10 abgefräst. Der Randstreifen 9 weist dann auf der Beschichtung 7 nur noch eine dünne Restschicht 11 des Faserstoffs auf, deren Dicke in der Größenordnung von 0,1 mm liegt. Diese Dicke reicht aus, um den Randstreifen die für den Fräsvorgang und die anschließende Behandlung genügende Eigenfestigkeit zu geben.

Die Abfräsung kann an den einzelnen Zuschnitten vorgenommen werden. Jedoch ist es auch möglich, sie an den Rändern einer Bahn vorzunehmen, aus der anschließend die Zuschnitte hergestellt werden.

Anschließend wird gemäß Fig. 3 an den einzelnen Zuschnitten oder an der zur Herstellung der Zuschnitte bestimmten Bahn der Randstreifen 9 auf die später außen zu liegende bestimmte Seite zurückgeschlagen, so daß die offene Fräskante 5 davon eingeschlossen wird. Er kann in dieser Lage mit geeigneten Mitteln auch angeheftet oder vollständig angesiegelt werden, um die weiteren Bearbeitungsschritte zu erleichtern.

Die Verbindung des umgelegten Randstreifens mit dem Zuschnittrand 2 geschieht mittels der außenseitigen, siegelbaren Beschichtung 8. Schließlich wird die Überlappungsnaht mittels Ultraschallsiegelung unter Pressung gemäß Fig. 4 fertiggestellt. Die Schnittkante 5 ist dann dicht vom Behälterinnern. abgeschlossen. Die Kraftübertragung zwischen den Zuschnitträndern 1 und 2 verläuft von der Beschichtung 8 des Zuschnittrandes 2 auf den Papierrest 11 des Randstreifens, von diesem auf die ihm zugehörige Beschichtung 12, die ein Teil der innenseitigen Beschichtung 7 ist, und von dieser auf die innenseitige Beschichtung 7 des Randstreifens 1. Da die Papierrestschicht 11 dünn und durch den im Siegelvorgang eindringenden Kunststoff verstärkt ist, vermag sie auch Kräfte zu übertragen, die in Pfeilrichtung 13 wirken, ohne delaminiert zu werden. Deshalb kann der umgelegte Randstreifen sich über die gesamte Breite der Überlappungsnaht erstrecken oder - mit anderen Worten - bei der Bemessung der Breite der Überlappungsnaht braucht auf den umgeschlagenen Randstreifen keine Rücksicht genommen zu werden. Wenn man ihn auch auf der Außenseite vor Feuchtigkeitseinfluß schützen will, genügt es, die Naht nur wenig breiter als den umgeschlagenen Randstreifen zu machen, so daß dieser immer noch mehr als zwei Drittel der Breite der Naht einnimmt.

Das Siegelungsmaterial, also der im Siegelvorgang schmelzflüssig werdende Kunststoff, der von dem Beschichtungsmaterial oder einem besonderen Auftrag gebildet sein kann, dringt im Siegelvorgang mehr oder weniger weit in die Papierschicht ein. Die Eindringtiefe wird bestimmt von der Fließfähigkeit des Siegelungswerkstoffs, den Preßdruck und der Preßdauer sowie der Offenheit oder Porigkeit des Papiers. Es ergibt sich daraus eine bestimmte Eindringtiefe, die auch durch Wahl dieser Parameter beeinflußt werden kann. Um den erwähnten Verfestigungseffekt in der Restschicht des Papiers im Randstreifen zu erzielen, ist eine vollständige Durchdringung durch das Siegelungsmaterial nicht erforderlich ist. Es hat sich gezeigt, daß der Fräsvorgang die Voraussetzungen für das Eindringen des-Siegelungsmaterials die Restschicht günstig beeinflußt, weil die mit dem Fräsvorgang unvermeidlich verbundene Aufrauhung der gefrästen Oberfläche deren Offenheit und damit die Eindringmöglichkeiten für das flüssige Versiegelungsmaterial verbessert.

Im dargestellten Beispiel stehen auf der Außenseite der Restschicht 11 zwei Schichtdicken der Innenbeschichtung 7 und auf der Innenseite eine Schichtdicke der Außenbeschichtung 8 für die Verbindung und Verfestigung zur Verfügung. Das sind bei einer inneren Schichtdicke von 0,035 mm und einer äußeren Schichtdicke von 0,02 mm insgesamt 0,09 mm. Auch wenn davon nur ein kleiner Teil in die Restschicht 11 eindringt, reicht dies bei einer Dicke dieser Restschicht von ca 0,1 mm für eine kraftübertragende Verbindung aus.

## Patentansprüche

1. Verfahren zum Herstellen eines Behälters aus einem Zuschnitt von heißsiegelbar beschichtetem Papier mit einer eine feuchtigkeitsgeschützte Zuschnittkante enthaltenden Überlappungsnaht, bei dem ein außerhalb der zu bildenden Zuschnittkante liegender Randstreifen des Zuschnitts unter Belassung einer Beschichtung und einer Restschicht des Papiers abgefräst, um die Zuschnittkante umgeschlagen und in die Überlappungsnaht eingebunden wird, dadurch gekennzeichnet, daß bei beidseitig heißsiegelbar beschichtetem Papier der Randstreifen auf eine Restdicke des Papiers von etwa 0,1 mm und nicht mehr als 0,2 mm abgefräst wird und der Randstreifen durch Heißsiegelung unter Druck mit der beschichteten Oberfläche, auf die er umgeschlagen ist, verbunden wird.

2. Verfahren nach Anspruch 1, dadurch gekennzeichnet, daß die Siegelung durch Ultraschall erfolgt.

3. Verfahren nach Anspruch 1 oder 2, dadurch gekennzeichnet, daß die Dicke der Restschicht von Papier im Randstreifen nicht größer als die doppelte Summe der beiderseitigen Eindringtiefen des Siegelungsmaterials ist.

4. Verfahren nach einem der Ansprüche 1 bis 3, dadurch gekennzeichnet, daß die Dicke der Restschicht von Papier im Randstreifen nicht größer ist als die doppelte gemeinsame Dicke der ursprünglich auf ihren beiden Seiten zur Verfügung stehenden Siegelmaterialschichten.

5. Verfahren nach einem der Ansprüche 1 bis 4, dadurch gekennzeichnet, daß der umgeschlagene Randstreifen angesiegelt wird, bevor die Überlappungsnaht geschlossen wird.

6. Papierbehälter aus heißsiegelbar beschichtetem Papier mit einer feuchtigkeitsgeschützten Zuschnittkante an einer Überlappungsnaht, bei der ein dünn gefräster Randstreifen, der die Beschichtung (7) auf der von der Naht abgelegenen Seite des die Kante (5) bildenden Zuschnittrands fortsetzt, um die zu schützende Kante herum in die Überlappung der Naht eingeschlagen und darin eingebunden ist, dadurch gekennzeichnet, daß das Papier doppelseitig beschichtet ist und die Restschicht (11) des Papiers in dem abgefrästen Randstreifen, deren Dicke etwa 0,1 mm und nicht mehr als 0,2 mm beträgt, durch Heißsiegelung mit der beschichteten Oberfläche des die Kante (5) bildenden Zuschnittrands verbunden ist.

7. Papierbehälter nach Anspruch 6, dadurch gekennzeichnet, daß die Restschicht des Papiers von dem Beschichtungsmaterial bis auf eine Dicke von nicht mehr als etwa 0,1 mm durchdrungen ist.

8. Papierbehälter nach Anspruch 6 oder 7, dadurch gekennzeichnet, daß die Breite des abgefrästen Randstreifens mindestens etwa 2/3 der Breite der Überlappungsnaht einnimmt.

## Claims

1. A method of producing a container from a blank of paper with a heat-sealable coating, having an overlapping seam including a blank edge protected against moisture, in which an edge strip of the blank disposed outside the blank edge to be formed is skived leaving a coating and a residual layer of paper is folded over around the blank edge and is bonded into the overlapping seam,
characterised in that in the case of paper with a heat-sealable coating on both sides the edge strip is skived to a residual paper thickness of approximately 0.1 mm and not more than 0.2 mm, and the edge strip is joined by heat sealing under pressure to the coated surface on to which it is folded over.

2. A method according to Claim 1, characterised in that the sealing is effected by ultrasound.

3. A method according to Claim 1 or 2, characterised in that the thickness of the residual layer of paper in the edge strip is not greater than double the sum of the penetration depth of the sealing material on both sides.

4. A method according to any one of Claims 1 to 3, characterised in that the thickness of the residual layer of paper in the edge strip is not greater than double the joint thickness of the coatings of sealing material originally available on both sides thereof.

5. A method according to any one of Claims 1 to 4, characterised in that the folded-over edge strip starts to be sealed before the overlapping seam is closed.

6. A paper container of paper with a heat-sealable coating, and with a blank edge protected against moisture on an overlapping seam, in which a thinly skived edge strip, which extends the coating (7) on the side of the blank edge remote from the seam and forming the edge (5), is folded up around the edge to be protected into the overlapping of the seam and is bonded therein, characterised in that the paper is coated on two sides and the residual layer (11) of paper in the skived edge strip, the thickness of which is approximately 0.1 mm and not more than 0.2 mm, is joined by heat sealing to the coated surface of the blank edge forming the edge (5).

7. A paper container according to Claim 6, characterised in that the residual layer of paper is penetrated by the coating material to a thickness of not more than 0.1 mm.

8. A paper container according to Claim 6 or 7, characterised in that the width of the skived edge strip occupies at least approximately 2/3 of the width of the overlapping seam.

## Revendications

1. Procédé de fabrication d'un récipient en papier à partir d'un flan de papier enduit d'un revêtement thermosoudable, avec un joint à recouvrement dans lequel un chant du flan est protégé contre l'humidité, procédé dans lequel une bande en bordure du flan, située au dehors du chant à protéger du flan, est amincie à la fraise en laissant un revêtement et une couche restante du papier, est rabattue autour du chant du flan et est engagée dans le joint à recouvrement, caractérisé en ce que, avec un papier qui est enduit d'un revêtement thermosoudable sur ses deux faces, la bande bordante est amincie à la fraise à une épaisseur résiduelle du papier d'environ 0,1 mm et non supérieure à 0,2 mm, et la bande bordante est jointe par thermosoudage sous pression à la surface enduite de revêtement sur laquelle elle est rabattue.

2. Procédé selon la revendication 1, caractérisé en ce que le soudage est effectué par ultrasons.

3. Procédé selon la revendication 1 ou 2, caractérisé en ce que l'épaisseur de la couche restante de papier dans la bande bordante n'est pas supérieure au double de la somme des profondeurs de pénétration de la matière de soudage sur les deux faces.

4. Procédé selon l'une quelconque des revendications 1 à 3, caractérisé en ce que l'épaisseur de la couche restante de papier dans la bande bordante n'est pas supérieure au double de l'épaisseur totale des couches de matière de soudage disponibles initialement sur les deux faces.

5. Procédé selon l'une quelconque des revendications 1 à 4, caractérisé en ce que la bande bordante rabattue est soudée avant que le joint à recouvrement ne soit fermé.

6. Récipient en papier enduit d'un revêtement thermosoudable, comportant, au niveau d'un joint à recouvrement, un chant du flan de papier qui est protégé contre l'humidité, récipient dans lequel une bande bordante amincie par fraisage, qui prolonge le revêtement (7) du côté opposé au joint du bord du flan formant ledit chant (5), est rabattue autour du chant à protéger pour pénétrer entre les couches superposées du joint et y être fixée, caractérisé en ce que le papier est enduit d'un revêtement sur ses deux faces et en ce que la couche restante (11) du papier dans la bande bordante amincie par fraisage, dont l'épaisseur est d'environ 0,1 mm et n'est pas supérieure à 0,2 mm, est jointe par thermosoudage à la surface enduite du bord du flan qui forme ledit chant (5).

7. Récipient en papier selon la revendication 6, caractérisé en ce que la couche restante du papier est imprégnée de la matière de revêtement jusqu'à une épaisseur qui n'est pas supérieure à 0,1 mm environ.

8. Récipient en papier selon la revendication 6 ou 7, caractérisé en ce que la largeur de la bande bordante amincie par fraisage correspond au moins à 2/3 environ de la largeur du joint à recouvrement.
